(19) **Europäisches Patentamt / European Patent Office / Office européen des brevets**

(11) **EP 3 374 963 B1**

(12) **FASCICULE DE BREVET EUROPEEN**

(45) Date de publication et mention de la délivrance du brevet:
**06.01.2021 Bulletin 2021/01**

(21) Numéro de dépôt: **16794317.4**

(22) Date de dépôt: **10.11.2016**

(51) Int Cl.:
**G06T 5/00** *(2006.01)*       **G06T 5/50** *(2006.01)*

(86) Numéro de dépôt international:
**PCT/EP2016/077209**

(87) Numéro de publication internationale:
**WO 2017/081121 (18.05.2017 Gazette 2017/20)**

(54) **PROCEDE DE DECAMOUFLAGE D'UN OBJET**

VERFAHREN ZUR ENTTARNUNG EINES OBJEKTS

METHOD FOR DECAMOUFLAGING AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.11.2015 FR 1560826**

(43) Date de publication de la demande:
**19.09.2018 Bulletin 2018/38**

(73) Titulaire: **Safran Electronics & Defense**
**92100 Boulogne-Billancourt (FR)**

(72) Inventeurs:
• **ROUX, Nicolas**
**92100 Boulogne Billancourt (FR)**

• **FOUBERT, Philippe**
**92100 Boulogne Billancourt (FR)**
• **TOUATI, Thierry**
**92100 Boulogne Billancourt (FR)**
• **BOUSQUET, Marc**
**92100 Boulogne Billancourt (FR)**

(74) Mandataire: **Cabinet Le Guen Maillet**
**3, impasse de la Vigie**
**CS 71840**
**35418 Saint-Malo Cedex (FR)**

(56) Documents cités:
| | |
|---|---|
| FR-A1- 2 982 393 | FR-A1- 3 011 663 |
| US-A1- 2014 240 477 | US-A1- 2015 230 875 |
| US-B1- 6 356 646 | |

**Description**

L'invention concerne un procédé de décamouflage d'un objet dans une scène observée par une pluralité de dispositifs comprenant un dispositif d'acquisition d'images multi-spectrales et un dispositif d'acquisition d'images thermiques, et un dispositif mettant en œuvre ledit procédé.

Une méthode utilisée depuis la nuit des temps pour réaliser une surveillance consiste à affecter un rôle d'observation à un être humain. L'être humain utilise alors son système visuel et son système auditif pour détecter des objets ou des personnes. Les méthodes de surveillance utilisant le système visuel humain peuvent être mises en défaut lorsque les objets ou les personnes à détecter se fondent dans leur environnement, en utilisant, par exemple, des techniques de camouflage. Des objets ou des êtres humains ainsi camouflés deviennent alors furtifs au sens du système visuel humain, c'est-à-dire qu'ils sont invisibles ou difficilement visibles pour un œil humain.

Ces dernières années ont vu apparaître des systèmes de surveillance basés sur divers dispositifs aptes à capter des informations susceptibles de révéler une présence d'un objet ou d'un être humain. Ces dispositifs comprennent des dispositifs d'acquisition d'images fonctionnant dans diverses bandes spectrales allant du domaine du visible au domaine de l'infrarouge. Ces bandes spectrales sont situées notamment :

- dans le domaine du visible (VIS) comprenant des longueurs d'ondes allant de 0,38 à 0,78 micromètres ($\mu m$),
- dans le proche infrarouge (« Near Infra Red (NIR) » en terminologie anglo-saxonne) (0,78 à 1 $\mu m$)
- dans l'infrarouge à longueurs d'ondes courtes (« Short-wavelength infrared (SWIR) » en terminologie anglo-saxonne (1 à 2,5 $\mu m$)
- dans l'infrarouge à longueurs d'ondes moyennes (« Medium-wavelength Infrared (MWIR) » en terminologie anglo-saxonne) ou infrarouge moyen (2,5 à 5 $\mu m$)
- dans l'infrarouge à longueurs d'ondes longues (« Long-wavelength Infrared (LWIR) » en terminologie anglo-saxonne) (5 à 14 $\mu m$).

Les dispositifs d'acquisition d'images fonctionnant dans le domaine du visible tels que des dispositifs d'acquisition d'images VDO (Voie Directe Optique) et VJC (Voie Jour Couleurs), fournissent des images, dites respectivement images VDO et images VJC, proches de ce que verrait un être humain. On comprend alors aisément que les dispositifs d'acquisition d'images VDO et VJC n'apportent pas ou peu d'informations pertinentes sur un objet présent dans une scène lorsque cet objet se fond dans son environnement.

Il est connu que certains objets quasi-invisibles dans le domaine du visible, apparaissent plus distinctement dans certains domaines de l'infrarouge. Il est alors courant de coupler les dispositifs d'acquisition d'images fonctionnant dans le domaine du visible avec des dispositifs d'acquisition d'images infrarouges. Il est possible aussi d'utiliser des dispositifs d'acquisition d'images couvrant une gamme de longueurs d'ondes (ou bande spectrale) plus vaste comprenant une pluralité de bandes spectrales situées dans le domaine du visible et/ou le domaine de l'infrarouge. Ce type de dispositifs d'acquisition d'images, appelés dispositifs d'acquisition d'images IMS par la suite, est apte à capter des images multi-spectrales (IMS), comprenant une pluralité de composantes, chaque composante correspondant à une bande spectrale acquise par le dispositif d'acquisition d'images IMS.

Parmi les dispositifs d'acquisition d'images fonctionnant dans l'infrarouge, on connaît des dispositifs d'acquisition d'images fonctionnant dans l'infrarouge à longueurs d'ondes moyennes et/ ou à longueurs d'ondes longues (appelés indifféremment dispositifs d'acquisition d'images thermique ou VTH (Voie THermique) par la suite) aptes à capter une signature thermique d'un objet ou d'un être humain. Les dispositifs d'acquisition d'images thermiques souffrent de certaines limitations dans un contexte de surveillance au sol. En effet, lorsqu'une zone à surveiller se situe au sol, les dispositifs d'acquisition d'images thermiques peuvent être sensibles à des effets de fouillis thermique (« thermal clutter » en terminologie anglo-saxonne) provoqués par des objets chauds ne correspondant pas à des objets recherchés, tels que par exemples des pierres chauffées par le soleil. Cette sensibilité au fouillis thermique peut alors provoquer des fausses alarmes. Par ailleurs, du fait du fouillis thermique, un objet recherché peut se retrouver noyé dans des informations très bruitées. De plus, il est connu que les dispositifs d'acquisition d'images thermiques sont très peu efficaces pour déceler des objets statiques situés sur le sol en journée.

Bien que des améliorations des images issues des dispositifs d'acquisition d'images VJC, VDO, IMS et thermiques (appelées respectivement images VJC, VDO, IMS et thermiques (*i.e.* VTH) par la suite) soient possibles par des procédés de traitement d'images, ces améliorations sont généralement jugées insatisfaisantes. C'est ainsi qu'il est possible d'améliorer des images IMS ou VJC par des procédés de traitement d'images accentuant des contrastes dans lesdites images. Toutefois ces procédés, que nous appelons procédés d'accentuation de contraste par la suite, sont relativement efficaces pour faire ressortir une silhouette d'un objet ou d'un être humain, mais ne permettent pas de faire ressortir des détails internes à ladite silhouette. Or, il peut être intéressant d'obtenir des détails internes à la silhouette d'un objet afin de mieux identifier ledit objet.

La demande de brevet FR2982393 décrit un procédé de recherche de cible dans une image multispectrale qui combine une optimisation de contraste effectuée localement avec une présentation d'image de détection qui couvre un champ d'observation.

Le demande de brevet FR3011663 décrit un procédé de visualisation d'une image multispectrale par un opérateur qui utilise une optimisation de contraste par projection de Fisher.

On peut noter que, bien que bruitée, une image thermique peut fournir des informations intéressantes relatives à des détails internes à la silhouette d'un objet.

Par ailleurs, il est connu de plus qu'une combinaison ou qu'un affichage alterné d'informations provenant d'images VJC, VDO, IMS et thermiques n'est pas non plus satisfaisant.

Il est souhaitable de pallier ces inconvénients de l'état de la technique.

Il est notamment souhaitable de proposer un procédé et un dispositif permettant un décamouflage efficace d'un objet ou d'un être humain dans une scène. Il est de plus souhaitable que ledit procédé et ledit dispositif facilitent une identification dudit objet ou dudit être humain. En d'autres termes, il est souhaitable que ledit procédé et ledit dispositif soient aptes à fournir, par exemple à un opérateur chargé de surveiller une scène, une image comprenant une silhouette d'un objet recherché et des détails dudit objet dans la silhouette.

Selon un premier aspect de la présente invention, la présente invention concerne un procédé de décamouflage d'un objet dans une scène observée par une pluralité de dispositifs comprenant un dispositif d'acquisition d'images, dites multi-spectrales, comprenant une pluralité de composantes, chacune représentative d'une bande spectrale comprise dans un domaine visible et/ou du proche infrarouge et/ou de l'infrarouge à longueurs d'ondes courtes et un dispositif d'acquisition d'images, dites thermiques, comprenant au moins une composante représentative d'une bande spectrale comprise dans l'infrarouge moyen et/ou l'infrarouge à longueurs d'ondes longues. Le procédé comprend : obtenir une image multi-spectrale et une image thermique, chaque composante de l'image multi-spectrale et chaque composante de l'image thermique étant harmonisées spatialement et temporellement entre elles ; obtenir au moins une position d'une sous partie d'une image, dite fenêtre, et pour chaque position obtenue : extraire une fenêtre de chacune des images multi-spectrale et thermique à ladite position ; appliquer une procédure d'accentuation de contrastes à au moins une des fenêtres extraites comprenant une fenêtre extraite de l'image multi-spectrale, ladite procédure, lorsqu'elle est appliquée à une fenêtre permettant d'obtenir une fenêtre, dite fenêtre améliorée, dans laquelle un contraste entre des pixels correspondant à l'objet et des pixels ne correspondant pas à l'objet est accentué; former une fenêtre multi-composantes, chaque fenêtre améliorée obtenue et chaque fenêtre extraite sur laquelle n'a pas été appliquée ladite procédure fournissant au moins une composante de la fenêtre multi-composantes ; et, appliquer ladite procédure à la fenêtre multi-composantes; générer une image, dite image de restitution, en insérant chaque fenêtre améliorée obtenue en appliquant ladite procédure à chaque fenêtre multi-composantes formée dans une image réceptrice représentative de la scène.

Ledit procédé, grâce au couplage entre des informations issues d'images multi-spectrales et des informations issues d'images thermiques, permet de fournir à un opérateur chargé de surveiller une scène, une image comprenant une silhouette de l'objet recherché et des détails dudit objet dans la silhouette. La visualisation de l'objet et de ses détails s'en trouve améliorée.

Dans un mode de réalisation, la procédure d'accentuation de contrastes comprend lorsqu'elle est appliquée à une fenêtre : obtenir au moins une position d'un premier masque adapté pour contenir des pixels correspondant audit objet dans ladite fenêtre et pour chaque position : positionner ledit masque à ladite position dans ladite fenêtre ; définir un second masque comprenant des pixels de ladite fenêtre non compris dans le premier masque ; et, appliquer une projection de Fisher aux pixels de ladite fenêtre pour obtenir une fenêtre améliorée dans laquelle un contraste entre les pixels du premier et du second masque est accentué.

Dans un mode de réalisation, le premier masque est adapté pour que chaque pixel de l'objet soit contenu dans le premier masque.

Dans un mode de réalisation, le premier masque est adapté pour contenir chaque pixel d'un détail dudit objet ayant un intérêt pour identifier ledit objet.

Dans un mode de réalisation, le procédé comprend pour la fenêtre extraite de l'image multi-spectrale et la fenêtre extraite de l'image thermique : appliquer la procédure d'accentuation de contrastes pour une pluralité de positions du premier masque dans chacune desdites fenêtres, la pluralité de positions permettant de couvrir intégralement l'objet ; former une première fenêtre améliorée unique à partir de chaque fenêtre améliorée obtenue lors de chaque application de la procédure d'accentuation de contraste à la fenêtre extraite de l'image multi-spectrale et une seconde fenêtre améliorée unique à partir de chaque fenêtre améliorée obtenue lors de chaque application de la procédure d'accentuation de contraste à la fenêtre extraite de l'image thermique ; et, former la fenêtre multi-composantes à partir de la première et la seconde fenêtre améliorée unique.

Dans un mode de réalisation, le procédé comprend pour la fenêtre multi-composantes formée : appliquer la procédure d'accentuation de contrastes pour une pluralité de positions du premier masque dans la fenêtre multi-composantes, la pluralité de positions permettant de couvrir intégralement l'objet ; former une troisième fenêtre améliorée unique à partir de chaque fenêtre améliorée obtenue lors de chaque application de la procédure d'accentuation de contraste à la fenêtre multi-composantes ; utiliser la troisième fenêtre améliorée unique pour générer l'image de restitution.

Dans un mode de réalisation, la pluralité de composantes de l'image multi-spectrale comprend au moins une bande spectrale comprise dans le domaine visible correspondant à une couleur primaire rouge et/ou bleue et/ou verte et pour chaque position de ladite fenêtre obtenue le procédé comprend : appliquer la procédure d'accentuation de contraste à la fenêtre extraite de l'image multi-spectrale, chaque composante correspondant à une bande spectrale située dans le proche infrarouge et/ou de l'infrarouge à longueurs d'ondes courtes n'étant pas prise en compte ; calculer une valeur de contraste, dite valeur de contraste visible, entre les pixels correspondant au premier masque et les pixels correspondant au second masque de la fenêtre améliorée obtenue suite à l'application de la procédure d'accentuation de contraste ; et, mettre fin à la mise en œuvre du procédé de décamouflage d'un objet pour la position de ladite fenêtre obtenue lorsque ladite valeur de contraste visible est supérieure à un seuil prédéfini, dit seuil visible.

Dans un mode de réalisation, l'image thermique comprend au moins deux composantes et pour chaque position de ladite fenêtre obtenue le procédé comprend : appliquer la procédure d'accentuation de contraste à la fenêtre extraite de l'image thermique ; calculer une valeur de contraste, dite valeur de contraste thermique, entre les pixels correspondant au premier masque et les pixels correspondant au second masque de la fenêtre améliorée obtenue suite à l'application de la procédure d'accentuation de contraste à la fenêtre extraite de l'image thermique ; et, mettre fin à la mise en œuvre du procédé de décamouflage d'un objet pour la position de ladite fenêtre obtenue lorsque la valeur de contraste thermique est supérieure à un seuil prédéfini, dit seuil thermique.

Dans un mode de réalisation, les images multi-spectrales sont représentatives de bandes spectrales situées dans une bande spectrale allant de « 0,4 » à « 1 » $\mu m$ ou « 0,6 » à « 1 » $\mu m$, ou « 0,9 » à « 2,5 » $\mu m$ et les images thermiques sont représentatives d'une bande spectrale située entre « 3 » et « 5 » $\mu m$ ou entre « 8 » et « 12 » $\mu m$.

Selon un deuxième aspect de l'invention, l'invention concerne un dispositif de décamouflage d'un objet dans une scène observée par une pluralité de dispositifs comprenant un dispositif d'acquisition d'images, dites multi-spectrales, comprenant une pluralité de composantes chacune représentative d'une bande spectrale comprise dans un domaine visible et/ou du proche infrarouge et/ou de l'infrarouge à longueurs d'ondes courtes et un dispositif d'acquisition d'images, dites thermiques, comprenant au moins une composante représentative d'une bande spectrale comprise dans l'infrarouge moyen et/ou l'infrarouge à longueurs d'ondes longues. Le dispositif comprend : des moyens d'obtention pour obtenir une image multi-spectrale et une image thermique, chaque composante de l'image multi-spectrale et chaque composante de l'image thermique étant harmonisées spatialement et temporellement entre elles ; des moyens d'obtention pour obtenir au moins une position d'une sous partie d'une image, dite fenêtre, et pour chaque position obtenue : des moyens d'extraction pour extraire une fenêtre de chacune des images multi-spectrale et thermique à ladite position ; des moyens d'application pour appliquer une procédure d'accentuation de contrastes à au moins une des fenêtres extraites comprenant une fenêtre extraite de l'image multi-spectrale, ladite procédure, lorsqu'elle est appliquée à une fenêtre permettant d'obtenir une fenêtre, dite fenêtre améliorée, dans laquelle un contraste entre des pixels correspondant à l'objet et des pixels ne correspondant pas à l'objet est accentué; des moyens de formation pour former une fenêtre multi-composantes, chaque fenêtre améliorée obtenue et chaque fenêtre extraite sur laquelle n'a pas été appliquée ladite procédure fournissant au moins une composante de la fenêtre multi-composantes ; et, de moyens d'application pour appliquer ladite procédure à la fenêtre multi-composantes; des moyens de génération pour générer une image en insérant chaque fenêtre améliorée obtenue en appliquant ladite procédure à chaque fenêtre multi-composantes formée dans une image réceptrice représentative de la scène.

Selon un troisième aspect de l'invention, l'invention concerne un programme d'ordinateur, comprenant des instructions pour mettre en œuvre, par un dispositif, le procédé selon le premier aspect, lorsque ledit programme est exécuté par un processeur dudit dispositif

Selon un quatrième aspect de l'invention, l'invention concerne des moyens de stockage, stockant un programme d'ordinateur comprenant des instructions pour mettre en œuvre, par un dispositif, le procédé selon le premier aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un exemple de contexte dans lequel l'invention peut être mise en œuvre ;
- la Fig. 2A illustre schématiquement un exemple de dispositif d'acquisition d'images IMS compris dans un système de visualisation ;
- la Fig. 2B illustre schématiquement un exemple d'architecture matérielle d'un module de traitement compris dans un système de visualisation ;
- la Fig. 3 illustre schématiquement un exemple d'image mono-composante produite par un capteur d'images du dispositif d'acquisition d'images IMS;
- la Fig. 4 illustre schématiquement un procédé de décamouflage d'un objet dans une scène selon l'invention ;
- la Fig. 5 illustre schématiquement une procédure de vérification de furtivité comprise dans le procédé de décamouflage d'un objet dans une scène selon l'invention ;
- la Fig. 6 illustre schématiquement une procédure d'accentuation de contraste comprise dans le procédé de décamouflage d'un objet dans une scène selon l'invention ;

- la Fig. 7A illustre schématiquement une étape d'extraction d'une fenêtre dans une image ; et,
- la Fig. 7B illustre schématiquement une étape de définition de masques utilisés dans la procédure d'accentuation de contraste.

L'invention est décrite par la suite dans un contexte d'un système de visualisation comprenant un boîtier intégrant un dispositif d'acquisition d'images IMS, un dispositif d'acquisition d'images thermiques, un module de traitement et un dispositif de visualisation d'images tel qu'un écran. L'invention s'applique aussi dans un contexte plus large. L'invention s'applique notamment lorsque le dispositif d'acquisition d'images IMS, le dispositif d'acquisition d'images thermiques, le dispositif de visualisation d'images et le module de traitement du système de visualisation sont des éléments séparés et distants, chaque dispositif pouvant être fixe ou mobile et manipulé par des opérateurs différents.

Par ailleurs, on notera qu'un être humain apparaissant dans une image est considéré comme un objet.

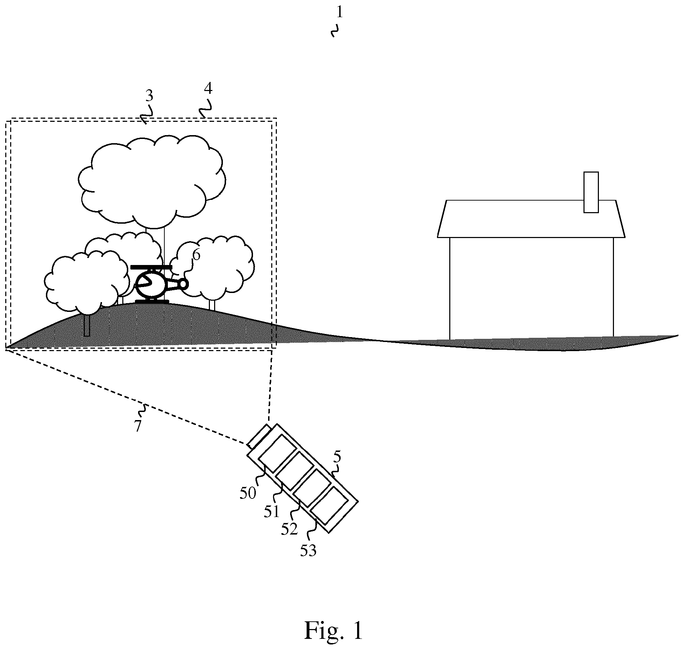

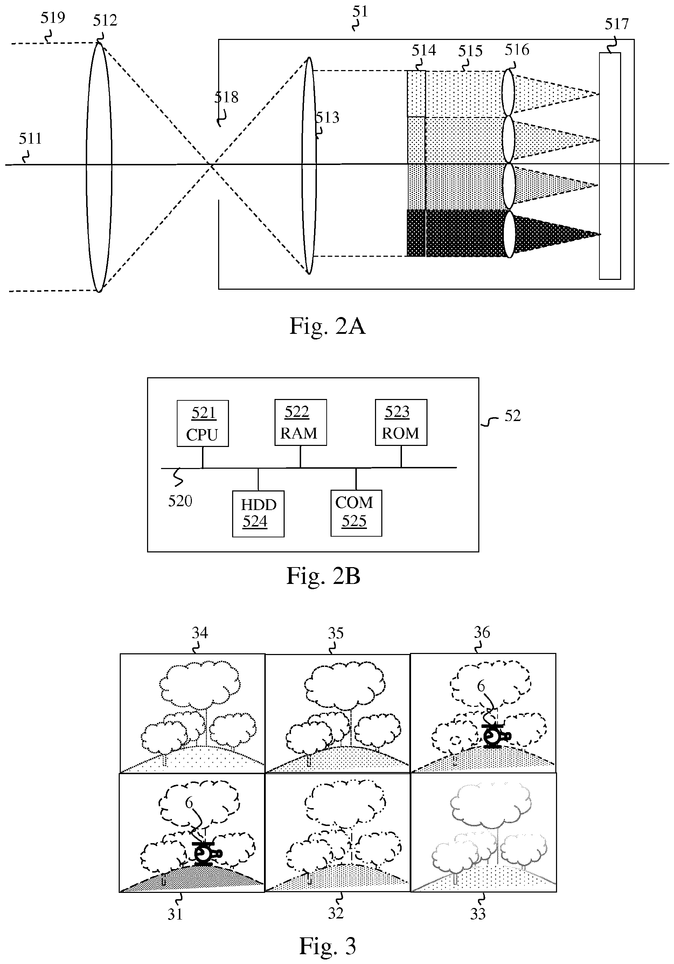

La **Fig. 1** illustre schématiquement un exemple de contexte dans lequel l'invention peut être mise en œuvre. Un opérateur (non représenté) observe une scène 1 comprenant un objet recherché 6 (ici un hélicoptère camouflé sous des branchages) à partir d'un système de visualisation 5. Le système de visualisation 5 comprend un dispositif d'acquisition d'images thermiques 50, un dispositif d'acquisition d'images IMS 51, un module de traitement 52 et un dispositif de visualisation d'images 53. Le dispositif d'acquisition d'images thermiques 50 est par exemple de type système d'acquisition vidéo et permet d'acquérir une séquence d'images thermiques 3 représentatives d'un champ optique 7 avec une première fréquence d'images. Le dispositif d'acquisition d'images IMS 51 est par exemple de type système d'acquisition vidéo et permet d'acquérir une séquence d'images IMS 4 représentatives du même champ optique 7 avec une seconde fréquence d'images. Dans un mode de réalisation, la première et la seconde fréquences d'images sont égales entre elles et égales à « 25 » à « 30 » images par seconde. Chaque image IMS 4 fournie par le dispositif d'acquisition d'images 51 est une image multi-spectrale dont nous détaillons des caractéristiques en relation avec la Fig. 3. Nous détaillons le dispositif d'acquisition d'images IMS 51 en relation avec la Fig. 2A.

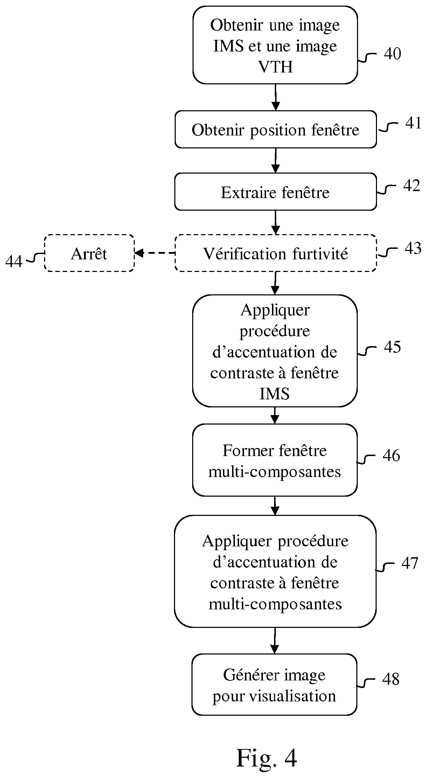

Le module de traitement 52 reçoit des images thermiques 3 et des images IMS 4 respectivement du dispositif d'acquisition d'images thermiques 50 et du dispositif d'acquisition d'images IMS 51 et leur applique un traitement que nous décrivons en relation avec la Fig. 4. Nous détaillons le module de traitement 52 en relation avec la Fig. 2B. A partir d'un couple d'images comprenant une image thermique 3 et une image IMS 4, le module de traitement 52 produit une image, dite image de restitution, dans laquelle l'objet recherché 6 est identifiable et fournit cette image au dispositif de visualisation d'images 53 qui l'affiche. Le dispositif de visualisation d'images 53 est par exemple un écran ou un œilleton du système de visualisation 5.

Dans un mode de réalisation, la première fréquence d'images est inférieure à la seconde fréquence d'images. Par exemple la première fréquence d'images est égale à « 15 » images par seconde et la seconde fréquence d'images est égale à « 30 » images par seconde.

La **Fig. 2A** illustre schématiquement un exemple de dispositif d'acquisition d'images IMS compris dans un système de visualisation.

Le dispositif d'acquisition d'images IMS 51 reçoit un faisceau lumineux 519 qu'il redirige vers un capteur d'images 517 pour créer une séquence d'images multi-spectrales 4. Pour ce faire le dispositif d'acquisition d'images 51 comprend une lentille primaire 512, un diaphragme de champ 518, une lentille secondaire 513, une matrice de filtres 514 et une matrice de mini lentilles 516. La lentille primaire 512, le diaphragme de champ 518, la lentille secondaire 513, la matrice de filtres 514, la matrice de mini lentilles 516, et le capteur d'images 517 sont perpendiculaires à un axe optique 511. L'ensemble lentille primaire 512, diaphragme 518, lentille secondaire 513 génère un faisceau lumineux collimaté à partir du faisceau lumineux 519. Le faisceau lumineux 519 est représentatif du champ optique 7 ayant un angle faible de l'ordre de « 2,5° » équiréparti autour de l'axe optique 511. Dans l'exemple de la Fig. 2A, il existe un ratio de focale de « 2 » entre la lentille primaire 512 et la lentille secondaire 513 de sorte à obtenir un grossissement par deux des informations provenant du champ optique 519. Le faisceau lumineux collimaté est reçu par la matrice de filtres 514. La matrice de filtres 514 est composée d'une pluralité de filtres décomposant le faisceau lumineux 519 en une pluralité de bandes spectrales. Par exemple, la matrice de filtres 514 comprend six filtres aptes à décomposer le faisceau lumineux en six bandes spectrales. Chacune des six bandes spectrales est située dans le domaine du visible et/ou dans le domaine du proche infrarouge et/ou dans l'infrarouge à longueurs d'ondes courtes. Par exemple, les six bandes spectrales se situent dans une bande spectrale allant de « 0,4 » à « 1 » $\mu m$ ou « 0,6 » à « 1 » $\mu m$, ou « 0,9 » à « 2,5 » $\mu m$. Dans un mode de réalisation, trois des six bandes spectrales sont situées dans le domaine du visible de manière à capter les trois couleurs primaires rouge, vert et bleu, les autres bandes spectrales étant situées dans le proche infrarouge et/ou l'infrarouge à longueurs d'ondes courtes. Une pluralité de sous faisceaux lumineux 515 est alors générée en sortie de la matrice de filtres 514 correspondant chacun à une des bandes spectrales de la pluralité de bandes spectrales. Dans l'exemple décrit en relation avec la Fig. 2A, six bandes spectrales sont générées. Chaque sous faisceaux lumineux de la pluralité de sous faisceau lumineux 515 est ensuite dirigé vers une zone du capteur d'images 517 par une mini lentille de la matrice de mini lentilles 516. La matrice de mini lentilles 516 comporte donc autant de mini lentilles que de bandes spectrales générées par la matrice de filtres 514 (*i.e.* six mini lentilles). Le capteur d'images 517 est par exemple un capteur CCD (« Charge-Coupled Device » en terminologie anglo-saxonne, dispositif à transfert de charge) ou un capteur CMOS (« Complementarity metal-oxide-semiconductor », en terminologie anglo-saxonne, semi-conducteur métal-oxyde complémentaire) comprenant une matrice de photosites aptes à transformer des photons lumineux incidents en un signal électrique. Un échantillonnage du signal électrique à la seconde fréquence d'images permet de former un pixel pour chaque photosite. Dans un mode de réalisation, le capteur d'images 517 est une matrice de $(3\times500)\times(2\times500)$ photosites aptes à produire des images comprenant $(3\times500)\times(2\times500)$ pixels. L'image issue du capteur d'images 517 est une image, dite mono-composante, possédant une composante, *i.e.* chaque pixel de l'image possède une composante.

La **Fig. 3** illustre schématiquement un exemple d'image mono-composante produite par un capteur d'images 517 du dispositif d'acquisition d'images IMS 51.

L'image mono-composante prend la forme d'une matrice d'imagettes 31 à 36. Chaque imagette résulte d'une focalisation sur le capteur d'images 517 par une mini lentille de la matrice de mini lentilles 516 d'un sous faisceau lumineux de la pluralité de sous faisceaux lumineux 515 fournie par la matrice de filtres 514. Chaque imagette 31 à 36 correspond donc à une bande spectrale de la pluralité de bandes spectrales et est représentative du champ optique 7. En fonction de propriétés de l'objet recherché 6, l'objet recherché 6 peut être visible dans zéro à six bandes spectrales, c'est à dire dans zéro à six imagettes 31 à 36. Dans l'exemple décrit en relation avec la Fig. 3, l'objet recherché 6 est visible dans l'imagette 31 et l'imagette 36. Par contre, l'objet recherché 6 est peu visible voire invisible dans les imagettes 32, 33, 34 et 35. La matrice d'imagettes comprend trois colonnes de deux imagettes de taille $500\times500$ pixels.

Dans un mode de réalisation, le dispositif d'acquisition d'images IMS 51 comprend une unité de traitement récupérant l'image mono-composante captée par le capteur d'images 517 et transformant cette image en une image IMS 4. L'image IMS 4 ainsi obtenue possède un nombre de pixels égal au nombre de pixels de l'image mono-composante divisé par le nombre de bandes spectrales fournies par la matrice de filtres 514. Chaque pixel de l'image IMS 4 possède un nombre de composantes égal au nombre de bandes spectrales fournies par la matrice de filtres 514. Dans l'exemple de la Fig. 3, l'image IMS 4 est donc de taille $500\times500$ pixels où chaque pixel possède six composantes. On suppose ici que les imagettes 31 à 36 de la matrice d'imagettes sont harmonisées spatialement, *i.e.* les imagettes sont recalées entre elles de manière à ce que tous les pixels situés à une même position spatiale dans les imagettes 31 à 36 correspondent à une même position spatiale dans la scène 1. De plus, on note que chaque composante d'un pixel de l'image multi-spectrale 3 correspond à un même instant temporel puisque toutes les imagettes ayant fourni une composante ont été acquises par le même capteur d'images 517 au même instant. En d'autres termes, les imagettes de la matrice d'imagettes sont harmonisées temporellement.

Chaque image produite par le dispositif d'acquisition d'images IMS 51 est fournie au module de traitement 52.

Le dispositif d'acquisition d'images thermiques 50 est de type caméra thermique et comprend par exemple un capteur infrarouge non refroidi. Dans un mode de réalisation, chaque image thermique 3 fournie par le dispositif d'acquisition d'images thermique 50 est de taille identique à l'image IMS 4. Les images thermiques sont des images mono-composantes représentatives d'une bande spectrale située dans le domaine de l'infrarouge moyen ou de l'infrarouge à longueurs d'ondes longues. Dans un mode de réalisation, les images thermiques sont représentatives d'une bande spectrale située entre « 3 » et « 5 »$\mu m$ ou entre « 8 » et « 12 » $\mu m$ ou entre « 7 » et « 14 » $\mu m$.

Chaque image produite par le dispositif d'acquisition d'images thermiques 50 est fournie au module de traitement 52.

Le module de traitement 52 utilise des couples d'images comprenant une image thermique 3 et une image IMS 4 dans lesquelles les images thermiques 3 et IMS 4 sont harmonisées spatialement et temporellement. Si le dispositif d'acquisition d'images IMS 51 et le dispositif d'acquisition d'images thermiques 50 ne génèrent pas directement des images harmonisées spatialement et temporellement, i.e. s'il n'y a pas de calibration (relative ou absolue) entre le dispositif d'acquisition d'images IMS 51 et le dispositif d'acquisition d'images thermiques 50, le module de traitement 52 génère à partir des images IMS 4 et thermiques 3 fournies respectivement par le dispositif d'acquisition d'images IMS 51 et le dispositif d'acquisition d'images thermiques 50, des couples d'images comprenant des images thermiques 3 et IMS 4 harmonisées.

Dans un mode de réalisation, les images thermiques 3 fournies par le dispositif d'acquisition d'images thermiques 50 sont de dimensions supérieures (respectivement inférieures) aux images IMS 4 fournies par le dispositif d'acquisition d'images IMS 51. Dans ce cas, préalablement à leur utilisation par le module de traitement 52, une harmonisation spatiale est appliquée entre l'image thermique 3 et l'image IMS 4 de sorte à mettre en correspondance chaque pixel de l'image thermique 3 avec un pixel de l'image IMS 4, *i.e.* il existe une relation bijective entre les pixels de l'image thermique 3 et les pixels de l'image IMS 4. Pour ce faire, chaque image thermique 3 est sous-échantillonnée (respectivement interpolée) par le module de traitement 52 aux dimensions de l'image IMS 4. De cette manière, les images thermiques et les images IMS correspondant à un même instant utilisées par le module de traitement 52 sont harmonisées spatialement.

Dans un mode de réalisation, lorsque la première fréquence d'images est inférieure à la seconde fréquence d'images, les images thermiques 3 sont interpolées temporellement par le module de traitement 52 pour atteindre la deuxième fréquence d'images. Une interpolation temporelle peut par exemple consister à répéter une image. De cette manière, les images thermiques 3 et les images IMS 4 sont harmonisées temporellement.

La **Fig. 2B** illustre schématiquement un exemple d'architecture matérielle d'un module de traitement compris dans un système de visualisation.

Selon l'exemple d'architecture matérielle représenté à la Fig. 2B, le module de traitement 52 comprend alors, reliés par un bus de communication 520 : un processeur ou CPU (« Central Processing Unit » en anglais) 521 ; une mémoire vive RAM (« Random Access Memory » en anglais) 522 ; une mémoire morte ROM (« Read Only Memory » en anglais) 523 ; une unité de stockage telle qu'un disque dur ou un lecteur de support de stockage, tel qu'un lecteur de cartes SD (« Secure Digital » en anglais) 524 ; au moins une interface de communication 525 permettant au module de traitement 52 de communiquer avec le dispositif d'acquisition d'images thermiques 50, le dispositif d'acquisition d'images IMS 51 et/ou le dispositif de visualisation d'images 53.

Dans un mode de réalisation dans lequel le dispositif d'acquisition d'images thermiques 50, le dispositif d'acquisition d'images IMS 51, le module de traitement 52 et le dispositif de visualisation 53 sont séparés et distants, le dispositif d'acquisition d'images thermiques 50, le dispositif d'acquisition d'images IMS 51 et le dispositif de visualisation 53 comprennent aussi une interface de communication pouvant communiquer avec l'interface de communication 525 par l'intermédiaire d'un réseau tel qu'un réseau sans fils.

Le processeur 521 est capable d'exécuter des instructions chargées dans la RAM 522 à partir de la ROM 523, d'une mémoire externe (non représentée), d'un support de stockage (tel qu'une carte SD), ou d'un réseau de communication. Lorsque le module de traitement 52 est mis sous tension, le processeur 521 est capable de lire de la RAM 522 des instructions et de les exécuter. Ces instructions forment un programme d'ordinateur causant la mise en œuvre, par le processeur 521, de tout ou partie du procédé décrit ci-après en relation avec les Figs. 4, 5 et 6.

Le procédé décrit ci-après en relation avec les Figs. 4, 5 et 6 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La **Fig. 4** illustre schématiquement un procédé de décamouflage d'un objet dans une scène selon l'invention.

Un objectif du procédé décrit en relation avec la Fig. 4, est de fournir à un opérateur regardant le dispositif de visualisation d'images 53, une image dans laquelle des pixels correspondant à l'objet 6 se distinguent clairement par rapport à un fond de l'image, le fond dans une image étant considéré ici comme tout pixel de ladite image ne correspondant pas à l'objet 6. De plus, le procédé permet de faire ressortir des contrastes internes à l'objet 6. Pour ce faire, ledit procédé est basé sur deux mises en œuvre successives d'une procédure d'accentuation de contraste.

Dans une étape 40, le module de traitement 52 obtient un couple d'images comprenant une image IMS 4 et une image thermique 3. L'image thermique 3 et l'image IMS 4 dudit couple sont harmonisées spatialement et temporellement, *i.e.* chaque composante de l'image multi-spectrale 4 et chaque composante de l'image thermique 3 sont harmonisées spatialement et temporellement entre elles.

Dans une étape 41, le module de traitement 52 obtient une position d'une sous partie d'une image, appelée fenêtre par la suite. Dans un mode de réalisation, la position, la forme et la taille de la fenêtre sont définies par un opérateur à l'aide d'un dispositif de commande relié au module de traitement 52.

Dans un mode de réalisation, la forme et la taille de la fenêtre sont adaptées à la forme et la taille de l'objet recherché 6.

Dans un mode de réalisation, l'opérateur définit une fenêtre carrée de cent pixels de côté.

Pour chaque position obtenue, le module de traitement 52 met en œuvre des étapes 42, 45, 46 et 47. Optionnellement, le module de traitement 52 met en œuvre des étapes 43 et 44 entre les étapes 42 et 45.

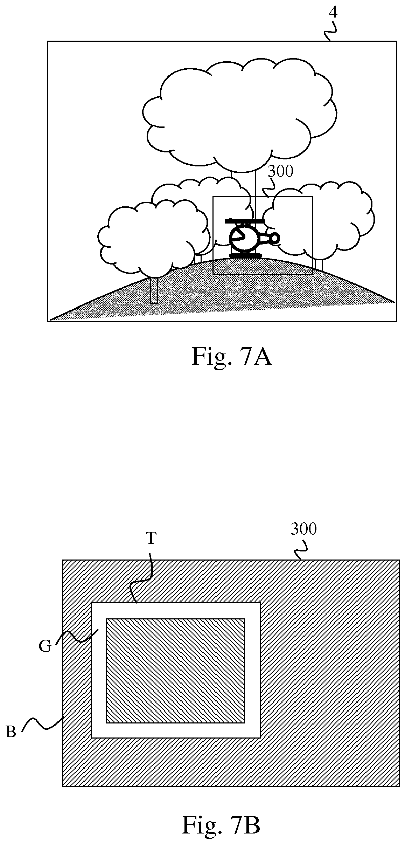

Lors de l'étape 42, le module de traitement 52 extrait une fenêtre de chacune des images IMS 4 et thermique 3 à ladite position. La **Fig. 7A** illustre schématiquement une étape d'extraction d'une fenêtre dans une image. La Fig. 7A prend l'exemple de l'image IMS 4 dans laquelle est positionnée une fenêtre 300 comprenant l'objet recherché 6.

Chaque fenêtre extraite est utilisée par la suite par le module de traitement 52 pour fournir à un opérateur une image dans laquelle un contraste entre des pixels appartenant à l'objet recherché 6 et des pixels n'appartenant pas à l'objet recherché 6 est accentué.

Lors de l'étape 45, le module de traitement 52 applique une procédure d'accentuation de contraste à au moins une des fenêtres extraites. La procédure d'accentuation de contraste, lorsqu'elle est appliquée à une fenêtre, permet d'obtenir une fenêtre, dite fenêtre améliorée, dans laquelle un contraste entre des pixels correspondant à l'objet et des pixels ne correspondant pas à l'objet est accentué. Lors de l'étape 45, la procédure d'accentuation de contraste est systématiquement appliquée à la fenêtre extraite de l'image IMS 4. Dans un mode de réalisation, lors de l'étape 45, la procédure d'accentuation de contraste est aussi appliquée à la fenêtre extraite de l'image thermique 3.

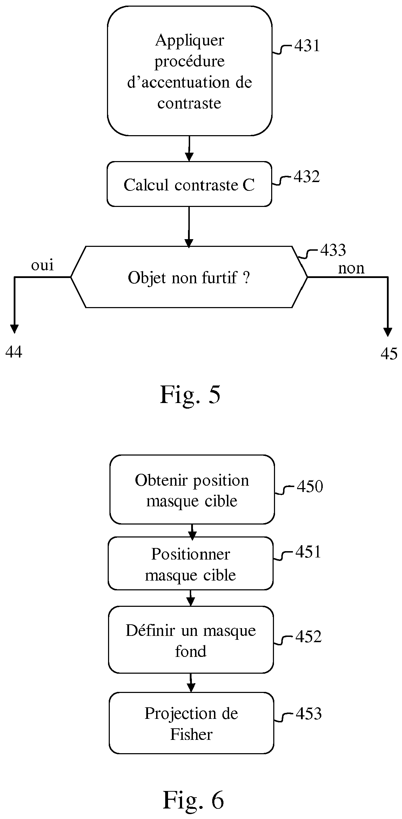

La **Fig. 6** illustre schématiquement une procédure d'accentuation de contraste comprise dans le procédé de décamouflage d'un objet dans une scène selon l'invention.

Lors d'une étape 450, le module de traitement 52 obtient une position d'un masque de pixels adapté pour contenir les pixels de la fenêtre 300 correspondant à l'objet recherché 6, appelé masque cible $T$. Dans un mode de réalisation, la position du masque cible $T$ est prédéfinie dans la fenêtre 300. Dans un autre mode de réalisation, la position du masque $T$ dans la fenêtre 300 est définie par un opérateur. Connaissant des caractéristiques de l'objet recherché 6, il est possible d'adapter la forme et/ou la taille du masque cible $T$ à la forme et la taille de l'objet recherché 6. Dans un mode de réalisation, le masque cible $T$ est carré et la taille du masque cible $T$ dépend de la taille de l'objet recherché 6. Dans un mode de réalisation, trois masques cibles $T$ sont à la disposition du module de traitement 52, un masque carré de trois pixels de côté, un masque carré de cinq pixels de côté et un masque carré de sept pixels de côté. Le module de traitement 52 choisit alors le masque cible $T$ le plus petit pouvant contenir intégralement l'objet recherché 6.

Lors de l'étape 451, le module de traitement 52 positionne le masque cible $T$ à la position obtenue dans la fenêtre 300.

Lors de l'étape 452, le module de traitement 52 définit un masque de pixels correspondant au fond dans la fenêtre 300 (*i.e.* un masque de pixels ne correspondant pas à l'objet recherché 6), appelé masque fond $B$. Dans un mode de réalisation, le masque fond $B$ est un masque complémentaire du masque cible $T,$ *i.e.* tous les pixels de la fenêtre 300 qui n'appartiennent pas au masque cible $T$ appartiennent au masque fond $B$.

Dans un mode de réalisation, une zone $G$ correspondant à une bande de quelques pixels autour du masque cible $T$ sépare le masque cible $T$ du masque fond $B$. La zone G permet d'éviter de prendre en compte, lors d'une accentuation de contraste, des pixels mal définis, *i.e.* des pixels ne pouvant pas être clairement définis comme appartenant à l'objet 6 ou au fond. Le masque fond $B$ correspond donc à tous les pixels de la fenêtre 300 n'appartenant ni au masque cible $T$, ni à la zone $G$. La **Fig. 7B** illustre schématiquement une étape de définition de masques cible $T$ et fond $B$ utilisés dans une procédure d'accentuation de contraste. Un masque cible $T$ rectangulaire est placé dans la fenêtre 300. Le masque cible $T$ est entouré d'une zone $G$. Un masque fond $B$ correspond à tous les pixels de la fenêtre 300 n'appartenant ni au masque cible $T$, ni à la zone $G$.

Lors de l'étape 453, le module de traitement 52 applique une projection de Fisher aux pixels de la fenêtre 300. Un procédé d'application d'une projection de Fisher décrit dans l'article « some practical issues in anomaly detection and exploitation of regions of interest in hyperspectral images » de F. Goudail et al., applied optics, Vols. 45, No. 21, pp. 5223-5236, est utilisé. Le procédé d'application d'une projection de Fisher permet d'accentuer le contraste entre les pixels appartenant au masque cible $T$ et les pixels appartenant au masque fond $B$. Ce procédé consiste à projeter chaque pixel de la fenêtre 300 sur une direction optimale d'un espace monodimensionnel ou multidimensionnel ou chaque dimension de l'espace correspond à une composante de la fenêtre 300 sur laquelle est appliquée la projection de Fisher. Dans l'exemple de la fenêtre 300 extraite de l'image IMS 4 décrit plus haut, chaque pixel de l'image IMS 4 comprend six composantes, chacune représentative d'une valeur d'intensité dans une bande spectrale. L'espace est alors un espace multidimensionnel à six dimensions. On suppose ici que les valeurs de chaque composante de chaque pixel correspondant au masque $T$ (respectivement au masque fond $B$), sont des variables aléatoires, spatialement non corrélées, et ayant une densité de probabilité Gaussienne de moyenne $m_T$ (respectivement $m_B$) et de matrice de covariance $\Gamma$. L'article précité mentionne des procédés d'estimation de la moyenne $m_T$ (respectivement $m_B$) et de la matrice de covariance $\Gamma$.

La direction optimale de projection, représentée par un vecteur $u,$ peut être déterminée à partir de la matrice de covariance $\Gamma$ selon la formule suivante :

$$u = \Gamma^{-1}(m^T - m^B)$$

où $m^T$ (respectivement $m^B)$ est un pixel moyen représentatif des pixels correspondant au masque $T$ (respectivement au masque $B$).

$$m^T = \left\{m_1^T, m_{2,}^T, ..., m_K^T\right\}$$

$$m^B = \left\{m_1^B, m_{2,}^B, ..., m_K^B\right\}$$

où $m_k^T$ (respectivement $m_k^B$ ), avec $k \in [1; K]$, est une valeur d'une composante du pixel moyen $m^T$ (respectivement $m^B)$ dans une bande spectrale $k,$ et $K$ est le nombre de composantes d'un pixel (ici $K=6$ pour la fenêtre extraite de l'image IMS 4).

$$m_k^T = \frac{1}{N_k^T} \sum_{i \in T} p_k^T(i)$$

$$m_k^B = \frac{1}{N_k^B} \sum_{i \in B} p_k^B(i)$$

où $p_k^T(i)$ (respectivement $p_k^B(i)$ (i)) est une valeur d'une $k$-ieme composante d'un $i$eme pixel $p^T(i)$ correspondant au masque cible $T$ (respectivement au masque fond $B$), et $N_k^T$ est un nombre de pixels correspondant au masque cible $T$ (respectivement au masque fond $B$).

La projection selon le vecteur $u$ est la projection de Fisher et revient à rechercher une corrélation maximale entre des variations de valeurs de composantes.

Chaque pixel $p(i)$ de la fenêtre 300 est projeté selon la projection de Fisher :

$$f(i) = u^t . p(i)$$

où $u^t$ est la transposée du vecteur u, $f(i)$ est un pixel d'une fenêtre améliorée (aussi appelée fenêtre de projection de Fisher $F$) correspondant à un résultat d'une application de la projection de Fisher sur la fenêtre 300. La fenêtre améliorée est une fenêtre mono-composante de forme et de taille identiques à la fenêtre 300.

Nous avons considéré jusque-là que toutes les bandes spectrales de la pluralité de bandes spectrales étaient prises en compte pour la projection de Fisher. Dans un mode de réalisation, la projection de Fisher ne prend en compte pour chaque pixel qu'un sous-ensemble des composantes dudit pixel, *i.e.* un sous ensemble des bandes spectrales de la pluralité de bandes spectrales. Par exemple, la projection de Fisher pourrait ne prendre en compte que les deux ou trois bandes spectrales dans lesquelles le contraste entre les pixels du masque cible $T$ et les pixels du masque fond $B$ est le plus élevé. Le contraste dans une bande spectrale peut-être défini de la manière suivante :

$$C_k = \frac{(m_k^T - m_k^B)^2}{(\sigma_k^B)^2}$$

où $\sigma_k^B$ est un écart type des valeurs de composantes correspondant à la bande spectrale $k$ des pixels correspondant au masque $B$. La projection de Fisher prend alors en compte les deux ou trois bandes spectrales associées aux valeurs de contraste $C_k$ les plus élevées.

De retour à la Fig. 4, lors de l'étape 46, le module de traitement 52 forme une fenêtre multi-composantes. Chaque fenêtre améliorée obtenue par la mise en œuvre de la procédure d'accentuation de contraste et chaque fenêtre extraite sur laquelle n'a pas été appliquée la procédure d'accentuation de contraste fournit au moins une composante de la fenêtre multi-composantes. Par exemple, lorsque la procédure d'accentuation de contraste a été appliquée uniquement à la fenêtre extraite de l'image IMS 4, la fenêtre multi-composantes comprend une composante correspondant à la fenêtre améliorée obtenue par la procédure d'accentuation de contraste et une composante correspondant à la fenêtre extraite de l'image thermique 4. Dans un mode de réalisation, préalablement à la formation de la fenêtre multi-composantes, le module de traitement 52 procède à une mise à l'échelle des valeurs de composantes de chaque pixel de chaque fenêtre améliorée obtenue par la mise en œuvre de la procédure d'accentuation de contraste et de chaque fenêtre extraite sur laquelle n'a pas été appliquée la procédure d'accentuation de contraste. Un objectif de cette mise à l'échelle est que toutes les fenêtres utilisées pour créer la fenêtre multi-composantes aient des valeurs de composantes de pixels réparties sur une même plage de valeurs. Par exemple, une mise à l'échelle est appliquée à la valeur de composante de chaque pixel de la fenêtre améliorée obtenue lors de l'application de la procédure d'accentuation de contraste à la fenêtre extraite de l'image IMS 4 (respectivement à la valeur de composante de chaque pixel de la fenêtre extraite de l'image thermique 3) afin que la valeur de composante de chaque pixel de la fenêtre améliorée (respectivement de la fenêtre extraite de l'image thermique 3) soit répartie dans une plage de valeurs prédéfinie [*MIN; MAX*]. Dans un mode de réalisation, *MIN*=0 et *MAX=255.*

Lors de l'étape 47, le module de traitement 52 applique la procédure d'accentuation de contrastes décrite en relation avec les Figs. 6 et 7B à la fenêtre multi-composantes ainsi formée.

Dans une étape 48, le module de traitement 52 génère une image de restitution destinée à être affichée par le dispositif de visualisation d'images 53. Pour ce faire, le module de traitement 52 insère chaque fenêtre améliorée obtenue en appliquant la procédure d'accentuation de contraste à chaque fenêtre multi-composantes formée dans une image réceptrice représentative de la scène. Nous appelons par la suite *fenêtre de restitution* une fenêtre améliorée obtenue en appliquant la procédure d'accentuation de contraste à une fenêtre multi-composantes.

Pour ce faire, pour chaque fenêtre de restitution, le module de traitement 52 récupère la position de la fenêtre 300 obtenue lors de l'étape 41 et positionne la fenêtre de restitution dans une image réceptrice représentative de la scène 1 à ladite position. Le module de traitement 52 génère donc une image de restitution dans laquelle les valeurs des pixels situés dans une fenêtre de restitution sont les valeurs de pixels issus de la projection de Fisher appliquée à la fenêtre multi-composantes correspondante et les valeurs des pixels situés en dehors d'une fenêtre de restitution sont les valeurs des pixels de l'image réceptrice.

Dans un mode de réalisation, l'image réceptrice est une imagette de la matrice d'imagettes.

Dans un mode de réalisation, le module de traitement 52 reconstruit une image réceptrice à partir d'un sous-ensemble de bandes spectrales de la pluralité de bandes spectrales. Par exemple, le module de traitement 52 utilise trois bandes spectrales situées dans le domaine du visible correspondant aux trois couleurs primaires rouge, vert et bleu et crée une image réceptrice représentative de ce qu'un système visuel humain verrait de la scène 1.

L'image de restitution est ensuite affichée à un opérateur par l'intermédiaire du dispositif de visualisation 53.

Dans un mode de réalisation, dit mode automatique, ce n'est pas un opérateur qui définit la position de la fenêtre 300 et la position du masque cible *T*. Plusieurs positions de la fenêtre 300 sont testées successivement par le module de traitement 52. Par exemple, la fenêtre 300 est déplacée dans l'image IMS 4 (respectivement dans l'image thermique 3) de sorte que chaque pixel de l'image IMS 4 apparaisse au moins une fois dans la fenêtre 300. Pour chaque position de la fenêtre 300 testée, le module de traitement 52 met en œuvre les étapes 42, 45, 46 et 47. Dans ce mode de réalisation, lors de l'étape 451, le masque cible *T* est défini automatiquement de manière à ce qu'il soit positionné au centre de la fenêtre 300. Suite aux mises en œuvre des étapes 42, 45, 46 et 47, le module de traitement 52 sélectionne au moins une des fenêtres de restitution obtenues et applique l'étape 48 à chaque fenêtre de restitution sélectionnée. Par exemple, le module de traitement 52 sélectionne la fenêtre de restitution affichant le plus fort contraste entre les pixels correspondant au masque cible *T* et les pixels correspondant au masque fond *B*. Dans ce cas, on considère que la fenêtre de restitution affichant le plus fort contraste entre les pixels correspondant au masque cible *T* et les pixels correspondant au masque fond *B* permet d'obtenir une bonne image de restitution.

Dans un mode de réalisation pouvant être combiné avec le mode automatique entre les étapes 42 et 45, le module de traitement 52 met en œuvre les étapes 43 et 44. L'étape 43 que nous décrivons plus en détail en relation avec la Fig. 5, permet de tester si un objet présent dans une fenêtre 300 est furtif au sens du système visuel humain. Un objet est non furtif au sens du système visuel humain s'il apparaît clairement dans au moins une bande spectrale située dans le domaine du visible. Il n'est pas nécessaire de tenter d'améliorer la visualisation d'un objet, si cet objet est non furtif, c'est-à-dire clairement visible et identifiable dans une scène. Lorsque lors de l'étape 43, un objet est considéré comme non furtif par le module de traitement 52, le module de traitement 52 met en œuvre l'étape 44 au cours de laquelle il met fin à la mise en œuvre du procédé de décamouflage d'un objet pour la position de la fenêtre 300 obtenue lors de l'étape 41. Sinon, si l'objet est considéré comme furtif par le module de traitement 52, le module de traitement 52 poursuit la mise en œuvre du procédé de décamouflage d'un objet avec l'étape 45 déjà expliquée.

Dans ce mode de réalisation, nous considérons que la pluralité de bandes spectrales comprend trois bandes spectrales situées dans le domaine du visible et correspondant aux trois couleurs primaires rouge, vert et bleu. Le dispositif d'acquisition d'images IMS 51 est donc apte à fournir des bandes spectrales que fournirait un capteur VJC. Le dispositif d'acquisition d'images IMS 51 se comporte donc comme un équipement comprenant un dispositif d'acquisition d'images apte à fournir des images VJC et un dispositif d'acquisition d'images apte à acquérir des bandes spectrales situées dans le proche infrarouge et/ou l'infrarouge à longueurs d'ondes courtes. Dans un mode de réalisation, le dispositif d'acquisition d'images IMS 51 est remplacé par un équipement comprenant un dispositif d'acquisition d'images apte à fournir des images VJC et un dispositif d'acquisition d'images apte à acquérir des bandes spectrales situées dans le proche infrarouge et/ou l'infrarouge à longueurs d'ondes courtes.

La **Fig. 5** illustre schématiquement une procédure de vérification de furtivité comprise dans le procédé de décamouflage d'un objet dans une scène selon l'invention correspondant à l'étape optionnelle 43.

Dans une étape 431, le module de traitement 52 applique la procédure d'accentuation de contraste décrite en relation avec la Fig. 6 à la fenêtre 300 extraite de l'image IMS 4 en prenant en compte au moins une des trois composantes correspondant à des bandes spectrales situées dans le domaine du visible, c'est-à-dire au moins une des bandes spectrales correspondant aux trois couleurs primaires rouge, vert et bleu.

Dans une étape 432, le module de traitement 52 calcule une valeur de contraste C entre les pixels correspondant au masque *T* et les pixels correspondant au masque *B* de la fenêtre améliorée obtenue suite à la mise en œuvre de la procédure d'accentuation de contraste lors de l'étape 431.

$$ C = \frac{\left( \hat{m}^{T} - m^{B} \right)^{2}}{\left( \sigma^{B} \right)^{2}} $$

où $m^{T}$ (respectivement $m^{B}$) est une valeur moyenne des pixels correspondant au masque *T* (respectivement *B*), et $\sigma^{B}$ est un écart type des pixels correspondant au masque *B*.

Dans une étape 433, le module de traitement 52 détermine si la fenêtre 300 extraite de l'image IMS 4 comprend un objet non furtif. Pour ce faire, le module de traitement 52 compare la valeur de contraste *C* à une valeur de contraste seuil prédéfinie $C_{s}$ (par exemple $C_{s}$ = 2,3). Lorsque $C > C_{s}$, le module de traitement 52 considère que la fenêtre 300 comprend un objet non furtif. Dans ce cas, l'étape 433 est suivie par l'étape 44. Lorsque $C \leq C_{s}$, le module de traitement 52 considère que la fenêtre 300 ne comprend pas un objet non furtif. Dans ce cas, l'étape 433 est suivie par l'étape 45.

Dans un mode de réalisation, l'image thermique 3 est une image multi-composantes. Par exemple, l'image thermique 3 comprend une composante située dans l'infrarouge à longueurs d'ondes moyennes (MWIR) et une composante située dans l'infrarouge à longueurs d'ondes longues (LWIR). Dans ce mode de réalisation, la procédure de vérification de furtivité correspondant à l'étape optionnelle 43 décrite en relation avec la Fig. 5 se fait sur la fenêtre extraite de l'image thermique 3 lors de l'étape 42.

Dans ce cas, lors de l'étape 431, le module de traitement 52 applique la procédure d'accentuation de contraste décrite en relation avec la Fig. 6 à la fenêtre extraite de l'image thermique 3 en prenant en compte chacune des composantes de l'image thermique 3.

Lors de l'étape 432, le module de traitement 52 calcule une valeur de contraste $C$ entre les pixels correspondant au masque $T$ et les pixels correspondant au masque $B$ de la fenêtre améliorée obtenue suite à la mise en œuvre de la procédure d'accentuation de contraste lors de l'étape 431.

Dans l'étape 433, le module de traitement 52 détermine si la fenêtre extraite de l'image thermique 3 comprend un objet non furtif. Pour ce faire, le module de traitement 52 compare la valeur de contraste $C$ à la valeur de contraste seuil prédéfinie $C_s$. Lorsque $C > C_s$, le module de traitement 52 considère que la fenêtre extraite de l'image thermique 3 comprend un objet non furtif. Dans ce cas, l'étape 433 est suivie par l'étape 44. Lorsque $C \leq C_s$, le module de traitement 52 considère que la fenêtre extraite de l'image thermique 3 ne comprend pas un objet non furtif. Dans ce cas l'étape 433 est suivie par l'étape 45.

On note que les deux modes de réalisation de la Fig. 5 peuvent être combinés de sorte qu'une vérification de la furtivité d'un objet se fait sur moins une des bandes spectrales correspondant aux trois couleurs primaires rouge, vert et bleu et/ou sur les composantes de l'image thermique 3.

Dans un autre mode de réalisation de l'étape 43, le module de traitement 52 définit un masque $T$ et un masque $B$ directement dans chacune des composantes de l'image IMS 4 et chacune des composantes de l'image thermique 3 puis calcule une valeur de contraste $C$ entre les pixels correspondant au masque $T$ et les pixels correspondant au masque $B$ indépendamment pour chacune des composantes de l'image IMS 4 et chacune des composantes de l'image thermique 3. Si, pour au moins une desdites composantes $C > C_s$, l'étape 43 est suivie de l'étape 44. Sinon, l'étape 43 est suivie de l'étape 45.

Nous avons vu plus haut que, dans un mode de réalisation, la procédure d'accentuation de contraste est appliquée à la fenêtre extraite de l'image thermique 3. Dans ce cas il est préférable, afin de mieux faire ressortir les détails de l'objet recherché 6, non pas d'utiliser un masque $T$ adapté à la taille et la forme de l'objet recherché 6, mais plutôt un masque $T$ ayant une forme et une taille adaptées à la forme et la taille des détails ayant un intérêt pour identifier l'objet recherché 6. Dans un mode de réalisation, le masque $T$ utilisé dans la procédure d'accentuation de contraste décrite en relation avec la Fig. 6 possède une forme et une taille adaptées à la forme et la taille des détails ayant un intérêt pour identifier l'objet recherché 6. Lors des étapes 45 et 47, ladite procédure d'accentuation de contraste est mise en œuvre pour une pluralité de positions du masque $T$ dans la fenêtre 300 sur laquelle la procédure est appliquée. La pluralité de positions permet de couvrir intégralement la forme et la taille de l'objet 6.

Lors de l'étape 45, une pluralité de fenêtres améliorées est alors obtenue pour la fenêtre extraite de l'image IMS 4 (respectivement pour la fenêtre extraite de l'image thermique 3). Les fenêtres améliorées de la pluralité de fenêtres améliorées obtenue pour la fenêtre extraite de l'image IMS 4 sont combinées pour former une fenêtre améliorée unique pour la fenêtre extraite de l'image IMS 4. Les fenêtres améliorées de la pluralité de fenêtres améliorées obtenue pour la fenêtre extraite de l'image thermique sont combinées pour former une fenêtre améliorée unique pour la fenêtre extraite de l'image thermique 3. Les deux fenêtres améliorées ainsi obtenues sont alors utilisées lors de l'étape 46 pour former la fenêtre multi-composantes.

Lors de l'étape 47, une pluralité de fenêtres améliorées est obtenue pour la fenêtre multi-composantes. Les fenêtres améliorées de la pluralité de fenêtres améliorées obtenue pour la fenêtre multi-composantes sont combinées pour former une fenêtre améliorée unique pour la fenêtre multi-composantes. La fenêtre améliorée unique ainsi obtenue est utilisée lors de l'étape 48 pour générer l'image de restitution.

## Revendications

1.  Procédé de décamouflage d'un objet dans une scène observée par une pluralité de dispositifs comprenant un dispositif (51) d'acquisition d'images, dites multi-spectrales, comprenant une pluralité de composantes, chacune représentative d'une bande spectrale comprise dans un domaine visible et/ou du proche infrarouge et/ou de l'infrarouge à longueurs d'ondes courtes et un dispositif (50) d'acquisition d'images, dites thermiques, comprenant au moins une composante représentative d'une bande spectrale comprise dans l'infrarouge moyen et/ou l'infrarouge à longueurs d'ondes longues, **caractérisé en ce que** le procédé comprend :

    obtenir (40) une image multi-spectrale (4) et une image thermique (3), chaque composante de l'image multi-spectrale (4) et chaque composante de l'image thermique (3) étant harmonisées spatialement et temporellement entre elles ;
    obtenir (41) au moins une position d'une sous partie d'une image, dite fenêtre, et pour chaque position obtenue :

 • extraire (42) une fenêtre de chacune des images multi-spectrale (4) et thermique (3) à ladite position ;
 • appliquer (45) une procédure d'accentuation de contrastes à au moins une des fenêtres extraites comprenant une fenêtre extraite de l'image multi-spectrale (4), ladite procédure, lorsqu'elle est appliquée à une fenêtre permettant d'obtenir une fenêtre, dite fenêtre améliorée, dans laquelle un contraste entre des pixels correspondant à l'objet et des pixels ne correspondant pas à l'objet est accentué;
 • former (46) une fenêtre multi-composantes, chaque fenêtre améliorée obtenue et chaque fenêtre extraite sur laquelle n'a pas été appliquée ladite procédure fournissant au moins une composante de la fenêtre multi-composantes ; et,
 • appliquer (47) ladite procédure à la fenêtre multi-composantes;

générer (48) une image, dite image de restitution, en insérant chaque fenêtre améliorée obtenue en appliquant ladite procédure à chaque fenêtre multi-composantes formée dans une image réceptrice représentative de la scène.

2.  Procédé selon la revendication 1, **caractérisé en ce que** la procédure d'accentuation de contrastes comprend lorsqu'elle est appliquée à une fenêtre :
obtenir (450) au moins une position d'un premier masque (T) adapté pour contenir des pixels correspondant audit objet dans ladite fenêtre et pour chaque position :

 positionner (451) ledit masque à ladite position dans ladite fenêtre ;
 définir (452) un second masque (B) comprenant des pixels de ladite fenêtre non compris dans le premier masque ; et,
 appliquer (453) une projection de Fisher aux pixels de ladite fenêtre pour obtenir une fenêtre améliorée dans laquelle un contraste entre les pixels du premier et du second masque est accentué.

3.  Procédé selon la revendication 2, **caractérisé en ce que** le premier masque (T) est adapté pour que chaque pixel de l'objet soit contenu dans le premier masque (T).

4.  Procédé selon la revendication 2, **caractérisé en ce que** le premier masque (T) est adapté pour contenir chaque pixel d'un détail dudit objet ayant un intérêt pour identifier ledit objet.

5.  Procédé selon la revendication 4, **caractérisé en ce que** le procédé comprend pour la fenêtre extraite de l'image multi-spectrale (4) et la fenêtre extraite de l'image thermique (3) :

 appliquer (45) la procédure d'accentuation de contrastes pour une pluralité de positions du premier masque dans chacune desdites fenêtres, la pluralité de positions permettant de couvrir intégralement l'objet ;
 former (45) une première fenêtre améliorée unique à partir de chaque fenêtre améliorée obtenue lors de chaque application de la procédure d'accentuation de contraste à la fenêtre extraite de l'image multi-spectrale (4) et une seconde fenêtre améliorée unique à partir de chaque fenêtre améliorée obtenue lors de chaque application de la procédure d'accentuation de contraste à la fenêtre extraite de l'image thermique (3) ; et,
 former (46) la fenêtre multi-composantes à partir de la première et la seconde fenêtres améliorées uniques.

6.  Procédé selon la revendication 5, **caractérisé en ce que** le procédé comprend pour la fenêtre multi-composantes formée :

 appliquer (47) la procédure d'accentuation de contrastes pour une pluralité de positions du premier masque dans la fenêtre multi-composantes, la pluralité de positions permettant de couvrir intégralement l'objet ;
 former (47) une troisième fenêtre améliorée unique à partir de chaque fenêtre améliorée obtenue lors de chaque application de la procédure d'accentuation de contraste à la fenêtre multi-composantes ;
 utiliser (48) la troisième fenêtre améliorée unique pour générer l'image de restitution.

7.  Procédé selon l'une quelconque des revendications 2 à 6, **caractérisé en ce que** la pluralité de composantes de l'image multi-spectrale comprend au moins une bande spectrale comprise dans le domaine visible correspondant à une couleur primaire rouge et/ou bleue et/ou verte et **en ce que** pour chaque position de ladite fenêtre obtenue le procédé comprend :

 appliquer (431) la procédure d'accentuation de contraste à la fenêtre extraite de l'image multi-spectrale, chaque composante correspondant à une bande spectrale située dans le proche infrarouge et/ou de l'infrarouge à longueurs d'ondes courtes n'étant pas prise en compte ;
 calculer (432) une valeur de contraste, dite valeur de contraste visible, entre les pixels correspondant au premier masque et les pixels correspondant au second masque de la fenêtre améliorée obtenue suite à l'application de la procédure d'accentuation de contraste ; et,

mettre (433, 44) fin à la mise en œuvre du procédé de décamouflage d'un objet pour la position de ladite fenêtre obtenue lorsque ladite valeur de contraste visible est supérieure à un seuil prédéfini, dit seuil visible.

8. Procédé selon l'une quelconque des revendications 2 à 7, **caractérisé en ce que** l'image thermique comprend au moins deux composantes et **en ce que** pour chaque position de ladite fenêtre obtenue le procédé comprend :

appliquer (431) la procédure d'accentuation de contraste à la fenêtre extraite de l'image thermique ;

calculer (432) une valeur de contraste, dite valeur de contraste thermique, entre les pixels correspondant au premier masque et les pixels correspondant au second masque de la fenêtre améliorée obtenue suite à l'application de la procédure d'accentuation de contraste à la fenêtre extraite de l'image thermique ; et,

mettre (433, 44) fin à la mise en œuvre du procédé de décamouflage d'un objet pour la position de ladite fenêtre obtenue lorsque la valeur de contraste thermique est supérieure à un seuil prédéfini, dit seuil thermique.

9. Procédé selon l'une quelconque des revendications précédentes, **caractérisé en ce que** les images multi-spectrales sont représentatives de bandes spectrales situées dans une bande spectrale allant de « 0,4 » à « 1 » $\mu m$ ou « 0,6 » à « 1 » $\mu m$, ou « 0,9 » à « 2,5 » $\mu m$ et les images thermiques sont représentatives d'une bande spectrale située entre « 3 » et « 5 » $\mu m$ ou entre « 8 » et « 12 » $\mu m$.

10. Dispositif de décamouflage d'un objet dans une scène observée par une pluralité de dispositifs comprenant un dispositif (51) d'acquisition d'images, dites multi-spectrales, comprenant une pluralité de composantes chacune représentative d'une bande spectrale comprise dans un domaine visible et/ou du proche infrarouge et/ou de l'infrarouge à longueurs d'ondes courtes et un dispositif (50) d'acquisition d'images, dites thermiques, comprenant au moins une composante représentative d'une bande spectrale comprise dans l'infrarouge moyen et/ou l'infrarouge à longueurs d'ondes longues, **caractérisé en ce que** le dispositif comprend :

des moyens d'obtention (40) pour obtenir une image multi-spectrale (4) et une image thermique (3), chaque composante de l'image multi-spectrale (4) et chaque composante de l'image thermique (3) étant harmonisées spatialement et temporellement entre elles ;

des moyens d'obtention (41) pour obtenir au moins une position d'une sous partie d'une image, dite fenêtre, et pour chaque position obtenue :

• des moyens d'extraction (42) pour extraire une fenêtre de chacune des images multi-spectrale (4) et thermique (3) à ladite position ;

• des moyens d'application (45) pour appliquer une procédure d'accentuation de contrastes à au moins une des fenêtres extraites comprenant une fenêtre extraite de l'image multi-spectrale (4), ladite procédure, lorsqu'elle est appliquée à une fenêtre permettant d'obtenir une fenêtre, dite fenêtre améliorée, dans laquelle un contraste entre des pixels correspondant à l'objet et des pixels ne correspondant pas à l'objet est accentué;

• des moyens de formation (46) pour former une fenêtre multi-composantes, chaque fenêtre améliorée obtenue et chaque fenêtre extraite sur laquelle n'a pas été appliquée ladite procédure fournissant au moins une composante de la fenêtre multi-composantes ; et,

• des moyens d'application (47) pour appliquer ladite procédure à la fenêtre multi-composantes;

des moyens de génération (48) pour générer une image en insérant chaque fenêtre améliorée obtenue en appliquant ladite procédure à chaque fenêtre multi-composantes formée dans une image réceptrice représentative de la scène ;

11. Programme d'ordinateur, **caractérisé en ce qu'**il comprend des instructions pour mettre en œuvre, par un dispositif (52), le procédé selon l'une quelconque des revendications 1 à 9, lorsque ledit programme est exécuté par un processeur (521) dudit dispositif (52).

12. Moyens de stockage, **caractérisés en ce qu'**ils stockent un programme d'ordinateur comprenant des instructions pour mettre en œuvre, par un dispositif (52), le procédé selon l'une quelconque des revendications 1 à 9, lorsque ledit programme est exécuté par un processeur (521) dudit dispositif (52).

**Patentansprüche**

1. Verfahren zur Enttarnung eines Objekts in einer Szene, die von einer Mehrzahl von Vorrichtungen beobachtet wird, umfassend eine Vorrichtung (51) zur Erfassung multispektraler Bilder, umfassend eine Mehrzahl von Komponenten, die jeweils für ein Spektralband repräsentativ sind, das in einem sichtbaren und/oder Nahinfrarot- und/oder kurzwelligen Infrarotbereich liegt, und eine Vorrichtung (50) zur Erfassung von Wärmebildern, umfassend mindestens eine Komponente, die für ein Spektralband repräsentativ ist, das im Mittelinfrarot und/oder langwelligen Infrarot liegt, **dadurch gekennzeichnet, dass** das Verfahren Folgendes umfasst:

   Erhalten (40) eines Multispektralbilds (4) und eines Wärmebilds (3), wobei jede Komponente des Multispektralbilds (4) und jede Komponente des Wärmebilds (3) räumlich und zeitlich miteinander harmonisiert sind;
   Erhalten (41) mindestens einer Position eines Unterabschnitts eines Bilds, Fenster genannt, und für jede erhaltene Position:

   • Extrahieren (42) eines Fensters aus jedem der Multispektral- (4) und Wärmebilder (3) an der Position;
   • Anwenden (45) eines Kontrasthervorbungsverfahrens auf mindestens eins der extrahierten Fenster, umfassend ein Fenster, das aus dem Multispektralbild (4) extrahiert wurde, wobei es das Verfahren, wenn es auf ein Fenster angewandt wird, gestattet, ein verbessertes Fenster zu erhalten, bei dem ein Kontrast zwischen Pixeln, die dem Objekt entsprechen, und Pixeln, die nicht dem Objekt entsprechen, hervorgehoben ist;
   • Bilden (46) eines Mehrkomponentenfensters, wobei jedes erhaltene verbesserte Fenster und jedes extrahierte Fenster, auf welches das Verfahren nicht angewandt wurde, mindestens eine Komponente des Mehrkomponentenfensters bereitstellt; und
   • Anwenden (47) des Verfahrens auf das Mehrkomponentenfenster;

   Erzeugen (48) eines Wiedergabebilds durch Einfügen jedes erhaltenen verbesserten Fensters durch Anwenden des Verfahrens auf jedes Mehrkomponentenfenster, das in einem Empfangsbild gebildet ist, das für die Szene repräsentativ ist.

2. Verfahren nach Anspruch 1, **dadurch gekennzeichnet, dass** das Kontrasthervorbungsverfahren Folgendes umfasst, wenn es auf ein Fenster angewandt wird:
   Erhalten (450) mindestens einer Position einer ersten Maske (T), die geeignet ist, Pixel zu enthalten, die dem Objekt im Fenster entsprechen, und für jede Position:

   Positionieren (451) der Maske an der Position im Fenster;
   Definieren (452) einer zweiten Maske (B) umfassend Pixel des Fensters, die nicht in der ersten Maske enthalten sind; und
   Anwenden (453) einer Fischer-Projektion auf die Pixel des Fensters, um ein verbessertes Fenster zu erhalten, bei dem ein Kontrast zwischen den Pixeln der ersten und zweiten Maske hervorgehoben ist.

3. Verfahren nach Anspruch 2, **dadurch gekennzeichnet, dass** die erste Maske (T) so ausgelegt ist, dass jeder Pixel des Objekts in der ersten Maske (T) enthalten ist.

4. Verfahren nach Anspruch 2, **dadurch gekennzeichnet, dass** die erste Maske (T) geeignet ist, jeden Pixel eines Details des Objekts zu enthalten, bei dem ein Interesse daran besteht, das Objekt zu identifizieren.

5. Verfahren nach Anspruch 4, **dadurch gekennzeichnet, dass** das Verfahren für das Fenster, das aus dem Multispektralbild (4) extrahiert wurde, und das Fenster, das aus dem Wärmebild (3) extrahiert wurde, Folgendes umfasst:

   Anwenden (45) des Kontrasthervorbungsverfahrens für eine Mehrzahl von Positionen der ersten Maske in jedem der Fenster, wobei es die Mehrzahl von Positionen gestattet, das Objekt vollständig zu abzudecken;
   Bilden (45) eines ersten verbesserten Einzelfensters ausgehend von jedem verbesserten Fenster, das bei jeder Anwendung des Kontrasthervorbungsverfahrens auf das Fenster, das aus dem Multispektralbild (4) extrahiert wurde, erhalten wird, und eines zweiten verbesserten Einzelfensters ausgehend von jedem verbesserten Fenster, das bei jeder Anwendung des Kontrasthervorbungsverfahrens auf das Fenster, das aus dem Wärmebild (3) extrahiert wurde, erhalten wird; und
   Bilden (46) des Mehrkomponentenfensters ausgehend von dem ersten und zweiten verbesserten Einzelfenster.

6. Verfahren nach Anspruch 5, **dadurch gekennzeichnet, dass** das Verfahren für das gebildete Mehrkomponentenfenster Folgendes umfasst:

Anwenden (47) des Kontrasthervorhebungsverfahrens für eine Mehrzahl von Positionen der ersten Maske im Mehrkomponentenfenster, wobei es die Mehrzahl von Positionen gestattet, das Objekt vollständig zu abzudecken;

Bilden (47) eines dritten verbesserten Einzelfensters ausgehend von jedem verbesserten Fenster, das bei jeder Anwendung des Kontrasthervorhebungsverfahrens auf das Mehrkomponentenfenster erhalten wird;

Nutzen (48) des dritten verbesserten Einzelfensters, um das Wiedergabebild zu erzeugen.

7.  Verfahren nach einem der Ansprüche 2 bis 6, **dadurch gekennzeichnet, dass** die Mehrzahl von Komponenten des Multispektralbilds mindestens ein Spektralband umfasst, das im sichtbaren Bereich enthalten ist, der einer roten und/oder blauen und/oder grünen Primärfarbe entspricht, und dadurch, dass für jede Position des erhaltenen Fensters das Verfahren Folgendes umfasst:

Anwenden (431) des Kontrasthervorhebungsverfahrens auf das Fenster, das aus dem Multispektralbild extrahiert wurde, wobei jede Komponente, die einem Spektralband entspricht, das im Nahinfrarot und/oder kurzwelligen Infrarot liegt, nicht berücksichtigt wird;

Berechnen (432) eines Werts sichtbaren Kontrasts zwischen den Pixeln, die der ersten Maske entsprechen, und den Pixeln, die der zweiten Maske des verbesserten Fensters entsprechen, das nach der Anwendung des Kontrasthervorhebungsverfahrens erhalten wird; und

Beenden (433, 44) der Durchführung des Verfahrens zur Enttarnung eines Objekts für die Position des erhaltenen Fensters, wenn der Wert sichtbaren Kontrasts über einem vorgegebenen Schwellenwert, dem sichtbaren Schwellenwert, liegt.

8.  Verfahren nach einem der Ansprüche 2 bis 7, **dadurch gekennzeichnet, dass** das Wärmebild mindestens zwei Komponenten umfasst, und dadurch, dass für jede Position des erhaltenen Fensters das Verfahren Folgendes umfasst:

Anwenden (431) des Kontrasthervorhebungsverfahrens auf das Fenster, das aus dem Wärmebild extrahiert wurde;

Berechnen (432) eines Wärmekontrastwerts zwischen den Pixeln, die der ersten Maske entsprechen, und den Pixeln, die der zweiten Maske des verbesserten Fensters entsprechen, das nach der Anwendung des Kontrasthervorhebungsverfahrens auf das Fenster, das aus dem Wärmebild extrahiert wurde, erhalten wird; und

Beenden (433, 44) der Durchführung des Verfahrens zur Enttarnung eines Objekts für die Position des erhaltenen Fensters, wenn der Wärmekontrastwert über einem vorgegebenen Schwellenwert, dem Wärmeschwellenwert, liegt.

9.  Verfahren nach einem der vorhergehenden Ansprüche, **dadurch gekennzeichnet, dass** die Multispektralbilder für Spektralbänder repräsentativ sind, die in einem Spektralband liegen, das von "0,4" bis "1" $\mu m$ oder "0,6" bis "1" $\mu m$ oder "0,9" bis "2,5" $\mu m$ reicht, und die Wärmebilder für ein Spektralband repräsentativ sind, das zwischen "3" und "5" $\mu m$ oder zwischen "8" und "12" $\mu m$ liegt.

10. Vorrichtung zur Enttarnung eines Objekts in einer Szene, die von einer Mehrzahl von Vorrichtungen beobachtet wird, umfassend eine Vorrichtung (51) zur Erfassung multispektraler Bilder, umfassend eine Mehrzahl von Komponenten, die jeweils für ein Spektralband repräsentativ sind, das in einem sichtbaren und/oder Nahinfrarot- und/oder kurzwelligen Infrarotbereich liegt, und eine Vorrichtung (50) zur Erfassung von Wärmebildern, umfassend mindestens eine Komponente, die für ein Spektralband repräsentativ ist, das im Mittelinfrarot und/oder langwelligen Infrarot liegt, **dadurch gekennzeichnet, dass** die Vorrichtung Folgendes umfasst:

Erhaltungsmittel zum Erhalten (40) eines Multispektralbilds (4) und eines Wärmebilds (3), wobei jede Komponente des Multispektralbilds (4) und jede Komponente des Wärmebilds (3) räumlich und zeitlich miteinander harmonisiert sind;

Erhaltungsmittel (41) zum Erhalten mindestens einer Position eines Unterabschnitts eines Bilds, Fenster genannt, und für jede erhaltene Position:

• Extraktionsmittel (42) zum Extrahieren eines Fensters aus jedem der Multispektral- (4) und Wärmebilder (3) an der Position;
• Anwendungsmittel (45) zum Anwenden eines Kontrasthervorhebungsverfahrens auf mindestens eins der extrahierten Fenster, umfassend ein Fenster, das aus dem Multispektralbild (4) extrahiert wurde, wobei es das Verfahren, wenn es auf ein Fenster angewandt wird, gestattet, ein verbessertes Fenster zu erhalten, bei dem ein Kontrast zwischen Pixeln, die dem Objekt entsprechen, und Pixeln, die nicht dem Objekt entsprechen, hervorgehoben ist;
• Bildungsmittel zum Bilden (46) eines Mehrkomponentenfensters, wobei jedes erhaltene verbesserte Fenster und jedes extrahierte Fenster, auf welches das Verfahren nicht angewandt wurde, mindestens eine Komponente des Mehrkomponentenfensters bereitstellt; und
• Anwendungsmittel (47) zum Anwenden des Verfahrens auf das Mehrkomponentenfenster;

Erzeugungsmittel (48) zum Erzeugen eines Bilds durch Einfügen jedes erhaltenen verbesserten Fensters durch Anwenden des Verfahrens auf jedes Mehrkomponentenfenster, das in einem Empfangsbild gebildet ist, das für die Szene repräsentativ ist.

**11.** Computerprogramm, **dadurch gekennzeichnet, dass** es Anweisungen umfasst, um durch eine Vorrichtung (52) das Verfahren nach einem der Ansprüche 1 bis 9 durchzuführen, wenn das Programm von einem Prozessor (521) der Vorrichtung (52) ausgeführt wird.

**12.** Speichermittel, **dadurch gekennzeichnet, dass** sie ein Computerprogramm speichern, das Anweisungen umfasst, um durch eine Vorrichtung (52) das Verfahren nach einem der Ansprüche 1 bis 9 durchzuführen, wenn das Programm von einem Prozessor (521) der Vorrichtung (52) ausgeführt wird.

## Claims

**1.** Method for decamouflaging an object in a scene observed by a plurality of devices comprising a device (51) for acquiring images, called multi-spectral images, comprising a plurality of components, each one representative of a spectral band comprised in a visible and/or near-infrared and/or short-wavelength-infrared domain and a device (50) for acquiring images, called thermal images, comprising at least one component representative of a spectral band comprised in the mid-infrared and/or the long-wavelength infrared, **characterized in that** the method comprises:

> obtaining (40) a multi-spectral image (4) and a thermal image (3), each component of the multi-spectral image (4) and each component of the thermal image (3) being spatially and temporally harmonized with each other;
> obtaining (41) at least one position of a sub-part of an image, called a window, and, for each obtained position:
>
> > • extracting (42) a window from both the multi-spectral image (4) and thermal image (3) at said position;
> > • applying (45) a contrast accentuation procedure to at least one of the extracted windows comprising a window extracted from the multi-spectral image (4), said procedure, when it is applied to a window allowing a window, called an improved window, to be obtained in which a contrast between pixels corresponding to the object and pixels not corresponding to the object is accentuated;
• forming (46) a multi-component window, each obtained improved window and each extracted window on which said procedure has not been applied providing at least one component of the multi-component window; and
• applying (47) said procedure to the multi-component window;

> generating (48) an image, called a reconstruction image, by inserting each improved window obtained by applying said procedure to each formed multi-component window into a receiving image representative of the scene.

**2.** Method according to Claim 1, **characterized in that** the contrast accentuation procedure comprises, when it is applied to a window:

> obtaining (450) at least one position of a first mask (T) shaped to contain pixels corresponding to said object in said window, and for each position;
> positioning (451) said mask at said position in said window;
> defining (452) a second mask (B) comprising pixels of said window not comprised in the first mask; and
> applying (453) a Fisher projection to the pixels of said window to obtain an improved window in which a contrast between the pixels of the first and second masks is accentuated.

**3.** Method according to Claim 2, **characterized in that** the first mask (T) is shaped so that each pixel of the object is contained in the first mask (T).

**4.** Method according to Claim 2, **characterized in that** the first mask (T) is shaped to contain each pixel of a detail of said object that is of interest with respect to identifying said object.

**5.** Method according to Claim 4, **characterized in that** the method comprises, for the window extracted from the multi-spectral image (4) and the window extracted from the thermal image (3):

> applying (45) the contrast accentuation procedure for a plurality of positions of the first mask in each one of said windows, the plurality of positions allowing the object to be entirely covered; forming (45) a first single improved window from each improved window obtained upon each application of the contrast accentuation procedure to the window extracted from the multi-spectral image (4) and a second single improved window from each improved window obtained upon each application of the contrast accentuation procedure to the window extracted from the thermal image (3); and

forming (46) the multi-component window from the first and second single improved windows.

6. Method according to Claim 5, **characterized in that** the method comprises, for the formed multi-component window:

applying (47) the contrast accentuation procedure for a plurality of positions of the first mask in the multi-component window, the plurality of positions allowing the object to be entirely covered;

forming (47) a third single improved window from each improved window obtained upon each application of the contrast accentuation procedure to the multi-component window;

using (48) the third single improved window to generate the reconstruction image.

7. Method according to any one of Claims 2 to 6, **characterized in that** the plurality of components of the multi-spectral image comprises at least one spectral band comprised in the visible domain corresponding to a red and/or blue and/or green primary colour and **in that**, for each position of said obtained window, the method comprises:

applying (431) the contrast accentuation procedure to the window extracted from the multi-spectral image, each component corresponding to one spectral band situated in the near-infrared and/or in the short-wavelength infrared not being taken into account;

calculating (432) a value, called the visible-contrast value, of the contrast between the pixels corresponding to the first mask and the pixels corresponding to the second mask of the improved window obtained following the application of the contrast accentuation procedure; and

putting an end (433, 44) to the implementation of the method for decamouflaging an object for the position of said obtained window when said visible-contrast value is higher than a predefined threshold, called the visible threshold.

8. Method according to any one of Claims 2 to 7, **characterized in that** the thermal image comprises at least two components and **in that**, for each position of said obtained window, the method comprises:

applying (431) the contrast accentuation procedure to the window extracted from the thermal image;

calculating (432) a value, called the thermal-contrast value, of the contrast between the pixels corresponding to the first mask and the pixels corresponding to the second mask of the improved window obtained following the application of the contrast accentuation procedure to the window extracted from the thermal image; and

putting an end (433, 44) to the implementation of the method for decamouflaging an object for the position of said obtained window when the thermal-contrast value is higher than a predefined threshold, called the thermal threshold.

9. Method according to any one of the preceding claims, **characterized in that** the multi-spectral images are representative of spectral bands situated in a spectral band ranging from 0.4 to 1 $\mu$m or 0.6 to 1 $\mu$m, or 0.9 to 2.5 $\mu$m and the thermal images are representative of a spectral band situated between 3 and 5 $\mu$m or between 8 and 12 $\mu$m.

10. Device for decamouflaging an object in a scene observed by a plurality of devices comprising a device (51) for acquiring images, called multi-spectral images, comprising a plurality of components, each one representative of a spectral band comprised in a visible and/or near-infrared and/or short-wavelength-infrared domain and a device (50) for acquiring images, called thermal images, comprising at least one component representative of a spectral band comprised in the mid-infrared and/or the long-wavelength infrared, **characterized in that** the device comprises:

obtaining means (40) for obtaining a multi-spectral image (4) and a thermal image (3), each component of the multi-spectral image (4) and each component of the thermal image (3) being spatially and temporally harmonized with each other;

obtaining means (41) for obtaining at least one position of a sub-part of an image, called a window, and, for each obtained position:

• extraction means (41) for extracting a window from both the multi-spectral image (4) and thermal image (3) at said position;

• application means (45) for applying a contrast accentuation procedure to at least one of the extracted windows comprising a window extracted from the multi-spectral image (4), said procedure, when it is applied to a window allowing a window, called an improved window, to be obtained in which a contrast between pixels corresponding to the object and pixels not corresponding to the object is accentuated;

• formation means (46) for forming a multi-component window, each obtained improved window and each extracted window on which said procedure has not been applied providing at least one component of the multi-component window; and

• application means (47) for applying said procedure to the multi-component window;

generation means (48) for generating an image by inserting each improved window obtained by applying said procedure to each formed multi-component window into a receiving image representative of the scene.

11. Computer program, **characterized in that** it comprises instructions for the implementation, by a device (52), of the method according to any one of Claims 1 to 9, when said program is executed by a processor (521) of said device (52).

12. Storage means, **characterized in that** they store a computer program comprising instructions for the implementation, by a device (52), of the method according to any one of Claims 1 to 9, when said program is executed by a processor (521) of said device (52).

Fig. 1

Fig. 2A

Fig. 2B

Fig. 3

Obtenir une image
IMS et une image
VTH — 40

↓

Obtenir position fenêtre — 41

↓

Extraire fenêtre — 42

↓

Vérification furtivité — 43 ---> Arrêt — 44

↓

Appliquer
procédure
d'accentuation de
contraste à fenêtre
IMS — 45

↓

Former fenêtre
multi-composantes — 46

↓

Appliquer procédure
d'accentuation de
contraste à fenêtre
multi-composantes — 47

↓

Générer image
pour visualisation — 48

Fig. 4

Appliquer
procédure
d'accentuation de
contraste — 431

↓

Calcul contraste C — 432

↓

oui ⟨ Objet non furtif ? ⟩ 433 non

↓ 44 ↓ 45

## Fig. 5

Obtenir position
masque cible — 450

↓

Positionner
masque cible — 451

↓

Définir un masque
fond — 452

↓

Projection de
Fisher — 453

## Fig. 6

Fig. 7A

Fig. 7B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2982393
- FR 3011663

**Littérature non-brevet citée dans la description**

- **DE F. GOUDAIL et al.** some practical issues in anomaly detection and exploitation of regions of interest in hyperspectral images. *applied optics,* vol. 45 (21), 5223-5236